# EUROPEAN PATENT SPECIFICATION

(11) **EP 4 324 661 B1**
(45) Date of publication and mention of the grant of the patent: **26.02.2025**
(21) Application number: 23186480.2
(22) Date of filing: 19.07.2023
(51) Int. Cl.: B60C 11/03, B60C 11/16

(54) **PNEUMATIC TIRE**
LUFTREIFEN
PNEUMATIQUE

(30) Priority: 17.08.2022 JP 2022130016
(43) Date of publication of application: 21.02.2024
(73) Proprietor: Toyo Tire Corporation, Itami-shi, Hyogo 664-0847 (JP)
(72) Inventor: SAKURA, Masaaki, Hyogo, 664-0847 (JP)
(74) Representative: Meissner Bolte Partnerschaft mbB

(56) References cited:
- EP-A1- 2 165 859
- EP-A1- 2 402 178
- EP-A1- 3 375 644
- WO-A1-2014/118659
- WO-A1-2017/071842

## Description

### BACKGROUND OF THE INVENTION

### Field of the Invention

The present invention relates to a pneumatic tire having an insertion hole into which a stud pin is inserted formed in a tread.

### Description of the Related Art

A pneumatic tire having stud pins inserted into a tread is also referred to as a studded tire or a spiked tire, and is mainly used for traveling on an icy and snowy road. In general, since the stud pin is formed of a metal material, the insertion of a large number of stud pins may deteriorate uniformity of the tire. It is therefore desirable that a structure that takes this point into consideration be employed, but no specific configuration suitable for the structure has not been proposed.

Patent Document 1 proposes a studded tire in which, when an area between a pair of tire meridians arranged at intervals of 0.8 % of a tire circumferential length on a tire equator line is defined as a band-shaped area, and a plurality of the band-shaped areas are arranged over the entire circumference of the tire so as to be shifted by one degree along a tire circumferential direction, the plurality of band-shaped areas include a dense area having four or more stud pins and a sparse area having three or less stud pins, and the dense area is intermittently present along the tire circumferential direction. Such intermittent presence of the dense area possibly causes deterioration of uniformity of the tire.

### Prior Art Document

### Patent Document

Patent Document 1: JP 2021- 70 449 A

Further pneumatic tires with staggered insertion holes and studs in the tread surface are known from documents EP 3 375 644 A1, EP 2 165 859 A1, WO 2014/ 118659 and EP 2 402 178 A1.

### SUMMARY OF THE INVENTION

It is therefore an object of the present invention to provide a pneumatic tire capable of suppressing deterioration of uniformity caused by the insertion of a stud pin.

A pneumatic tire according to the present invention includes a tread in which an insertion hole into which a stud pin is inserted is formed, in which the tread includes a plurality of main grooves continuously extending along a tire circumferential direction, and is divided into a shoulder area located on an outer side in a tire axial direction and a center area located on an inner side in the tire axial direction relative to a groove width center of a shoulder main groove located on an outermost side in the tire axial direction among the plurality of main grooves, and when an area of 28 % of a ground contact width centered on a tire equator in the center area is defined as an equatorial area, and an area between the equatorial area and the shoulder main groove is defined as an equatorial neighboring area, the insertion hole formed in the equatorial neighboring area located on one side in the tire axial direction and the insertion hole formed in the equatorial neighboring area located on an other side in the tire axial direction are arranged in a staggered manner along the tire circumferential direction and no main groove is provided in the equatorial area .

### BRIEF DESCRIPTION OF THE DRAWINGS

FIG. 1 is a tire meridian cross-sectional view schematically illustrating a pneumatic tire according to the present embodiment;
FIG. 2 is a plan development view of a tread of the pneumatic tire according to the present embodiment;
FIG. 3 is an enlarged view of a main part of FIG. 2;
FIG. 4 is an enlarged view of a main part of FIG. 2;
FIG. 5 is a diagram illustrating a modification pertaining to an arrangement of insertion holes; and
FIG. 6 is a diagram for describing a positional relationship among the insertion holes.

### DETAILED DESCRIPTION OF THE PREFERRED EMBODIMENTS

Hereinafter, an embodiment according to the present invention will be described with reference to the drawings.

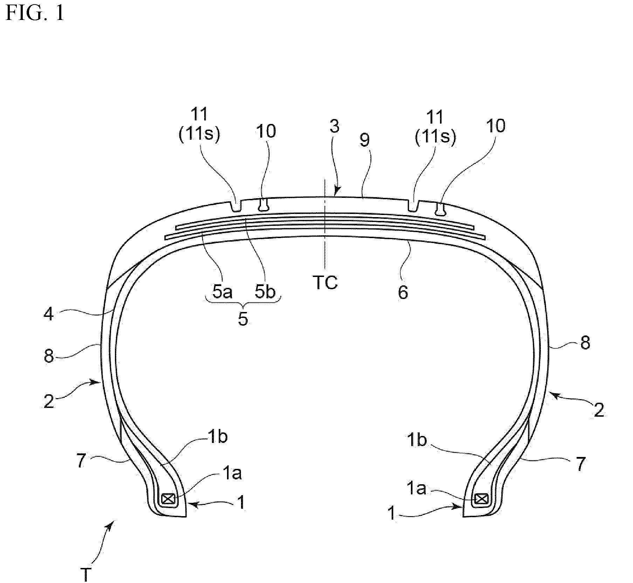

As illustrated in FIG. 1, a pneumatic tire T (hereinafter, may be simply referred to as a "tire T") according to the present embodiment includes a pair of bead portions 1, sidewalls 2 each extending outward in a tire radial direction from a corresponding one of the bead portions 1, and a tread 3 connected to an outer end of each of the sidewalls 2 in the tire radial direction. The tire T further includes a carcass 4 provided between the pair of bead portions 1, a belt 5 laminated on an outer side of the carcass 4 in the tire radial direction, and an inner liner 6 disposed on a tire inner surface.

Here, the tire radial direction is a direction along a diameter of the tire T and corresponds to a vertical direction in FIG. 1. In FIG. 1, an upper side is an outer side in the tire radial direction, and a lower side is an inner side in the tire radial direction. A tire axial direction is a direction parallel to a rotation axis of the tire T and corresponds to a horizontal direction in FIG. 1.

A side adjacent to a tire equator TC is an inner side in the tire axial direction, and a side remote from the tire equator TC is an outer side in the tire axial direction. The tire equator TC is a virtual line located at a center of the tire T in the tire axial direction and orthogonal to the tire rotation axis as viewed from above. A tire circumferential direction is a direction around the rotation axis of the tire T.

A bead core 1a having an annular shape is embedded in each bead portion 1. The bead core 1a includes a bundle member such as steel wires covered with rubber. A bead filler 1b is disposed adjacent to an outer side of the bead core 1a in the tire radial direction. The bead filler 1b includes rubber having a triangular cross section extending outward in the tire radial direction from the bead core 1a. A rim strip rubber 7 forming an outer surface of each bead portion 1 is provided on an outer side of the bead core 1a and an outer side of the bead filler 1b in the tire axial direction.

The carcass 4 extends in a toroidal shape across the pair of bead portions 1. The carcass 4 is wound up from the inside to the outside in the tire axial direction so as to surround the bead cores 1a and the bead fillers 1b. The carcass 4 includes a carcass ply formed by coating carcass cords with rubber. The carcass cords are paralleled in a direction intersecting the tire circumferential direction (for example, in a direction at an angle of 75° to 90° with respect to the tire circumferential direction). A sidewall rubber 8 forming an outer surface of each sidewall 2 is provided on the outer side of the carcass 4 in the tire axial direction.

The belt 5 includes a plurality of belt plies 5a and 5b laminated on each other. Each of the belt plies 5a and 5b includes belt cords paralleled in a direction inclined relative to the tire circumferential direction and covered with rubber. The belt plies 5a and 5b are laminated such that their respective belt cords extend in different directions to intersect each other. A tread rubber 9 forming an outer surface of the tread 3 is provided on an outer side of the belt 5 in the tire radial direction. The inner liner 6 includes rubber that is highly airtight, such as butyl rubber. The inner liner 6 holds an internal pressure of the tire T.

An insertion hole 10 into which a stud pin is inserted is formed in the tread 3. The tire T having a stud pin (not illustrated) inserted into each insertion hole 10 acts as a studded tire (also referred to as a spiked tire). In general, the stud pin is formed of a metal columnar member. The shape, material, size, and the like of the stud pin inserted into the tire T are not particularly limited. In the present embodiment, the insertion hole 10 is flask-shaped in cross section, but is not limited to such a shape.

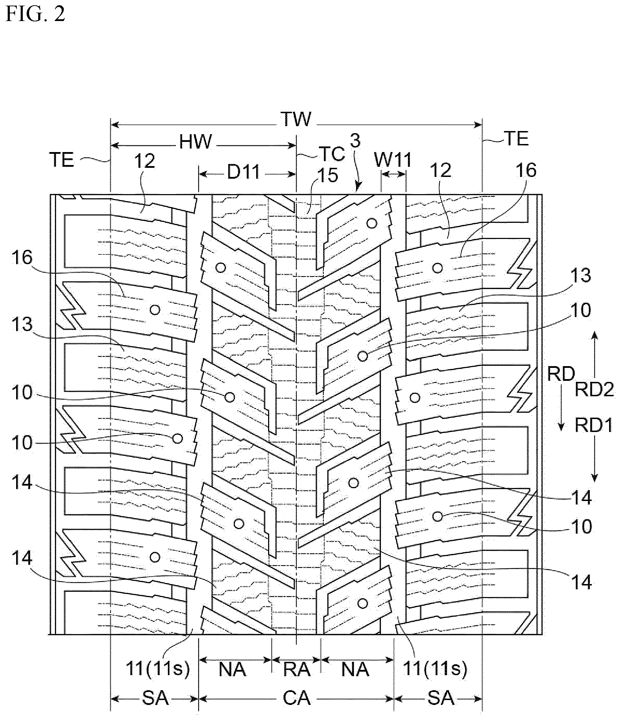

A tread pattern illustrated in FIG. 2 is formed on an outer circumferential surface of the tread 3. In the present embodiment, a tread pattern that is line-symmetric with respect to the tire equator TC and is shifted in phase in the tire circumferential direction is used. The tire T is a tire of a specified rotation direction type whose tire rotation direction is specified. An arrow RD indicates a tire rotation direction at the time of forward movement.

A front side RD1 in the rotation direction is also referred to as a leading side, and a rear side RD2 in the rotation direction is also referred to as a trailing side. The tire T need not necessarily have such a directional pattern, and may have a non-directional pattern. For example, the tire T may have a tread pattern formed point-symmetric with respect to a center point on the tire equator TC.

The tread 3 includes a plurality of main grooves 11 continuously extending along the tire circumferential direction. A groove width W 11 of the main grooves 11 on the outer circumferential surface of the tread 3 is, for example, equal to or greater than 10 mm. Of the plurality of main grooves 11, a main groove 11 located on an outermost side in the tire axial direction is referred to as a shoulder main groove 11s. In the present embodiment, the number of the main grooves 11 included in the tread 3 is two, and these main grooves correspond to the shoulder main grooves 11s. Note that the tread 3 may include three or more main grooves. The tread 3 is divided into a shoulder area SA located on the outer side in the tire axial direction and a center area CA located on the inner side in the tire axial direction relative to a groove width center of the shoulder main groove 11s.

The pair of shoulder main grooves 11s are arranged with the tire equator TC interposed between the shoulder main grooves 11s. A distance D11 from the groove width center of the shoulder main groove 1 1s to the tire equator TC is, for example, 52 % to 62 % of a ground contact half width HW. The ground contact half width HW corresponds a distance in the tire axial direction from the tire equator TC to a ground contact end TE.

The ground contact end TE corresponds to an outermost position of a ground contact surface in the tire axial direction in a case where the tire T mounted on a normal rim and inflated to a normal internal pressure is placed perpendicularly to a flat road surface, and a normal load is applied to the tire T. A ground contact width TW corresponds to a distance in the tire axial direction between the pair of ground contact ends TE, and a half of the ground contact width TW corresponds to the ground contact half width HW.

The normal rim is a "standard rim" in JATMA standard, a "Design Rim" in TRA standard, or a "Measuring Rim" in ETRTO standard. The normal internal pressure corresponds to a "maximum pneumatic pressure" in JATMA standard, a "maximum value" described in "TIRE LOAD LIMITS AT VARIOUS COLD INFLATION PRESSURES" in TRA standard, or "INFLATION PRESSURE" in ETRTO standard.

The normal load is a load defined for each tire by each standard in the standard system including the standard on which the tire is based. The normal load is the maximum load capacity in the case of JATMA, the maximum value described in the above table in the case of TRA, and "LOAD CAPACITY" in the case of ETRTO, and when the tire is for a passenger car, the normal load is 88 % of the above-described load.

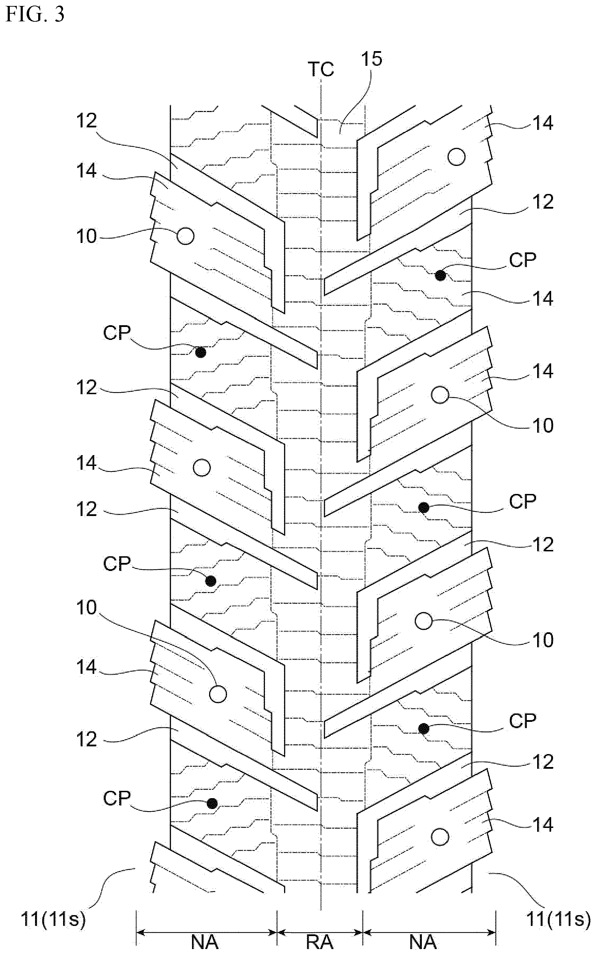

FIG. 3 is an enlarged view of a main part of FIG. 2, illustrating extracted lands provided in the center area CA. In the tire T, when an area of 28 % of the ground contact width TW centered on the tire equator TC in the center area CA is defined as an equatorial area RA, and an area between the equatorial area RA and the shoulder main groove 11s is defined as an equatorial neighboring area NA, the insertion hole 10 formed in the equatorial neighboring area NA located on one side in the tire axial direction and the insertion hole 10 formed in the equatorial neighboring area NA located on the other side in the tire axial direction are arranged in a staggered manner along the tire circumferential direction.

Such a configuration can prevent uneven distribution of the insertion holes 10 in the center area CA of the tread 3 and thus can suppress deterioration of uniformity caused by the insertion of the stud pins. In particular, deterioration of uniformity in tire shape in the tire circumferential direction can be suppressed, so that it is possible to suppress deterioration of fuel efficiency (rolling resistance) or deterioration of noise performance. Further, the stud pins are evenly arranged in the tread 3, so that it is possible to enhance a scratching effect of the stud pins on an icy and snowy road.

The equatorial area RA is provided with a rib 15 continuously extending in the tire circumferential direction. This makes it possible to ensure the ground contact surface of the equatorial area RA to which a high load is applied during driving or braking on the icy and snowy road and satisfactorily enhance grip. Instead of the rib 15, a block array in which a plurality of blocks is arranged may be provided in the equatorial area RA.

According to the invention, no insertion hole 10 is formed in the equatorial area RA. Therefore, the insertion holes 10 formed in the center area CA are arranged not in the equatorial area RA but in the equatorial neighboring area NA. The configuration where no stud pin is disposed in the equatorial area RA is suitable for ensuring the ground contact surface of the equatorial area RA to which a high load is applied during driving or braking on the icy and snowy road. Furthermore, in order to ensure the ground contact surface of the equatorial area RA, no main groove is provided in the equatorial area RA.

A center point CP (midpoint) between the insertion holes 10 formed in the equatorial neighboring area NA located on one side in the tire axial direction and a center point CP between the insertion holes 10 formed in the equatorial neighboring area NA located on the other side in the tire axial direction are alternately arranged in the tire circumferential direction such that a line sequentially connecting the center points CP along the tire circumferential direction becomes a wavy line (zigzag line).

As illustrated in FIG. 2, the insertion hole 10 formed in the equatorial neighboring area NA and the insertion hole 10 formed in the shoulder area SA adjacent to the equatorial neighboring area NA with the shoulder main groove 11s interposed between the equatorial neighboring area NA and the shoulder area SA are arranged in a staggered manner along the tire circumferential direction. This makes it possible to effectively suppress deterioration of uniformity caused by the insertion of the stud pins. In the present embodiment, such a staggered arrangement of the insertion holes 10 is applied to each of a pair of tread half portions, which enhances the above-described improvement effect.

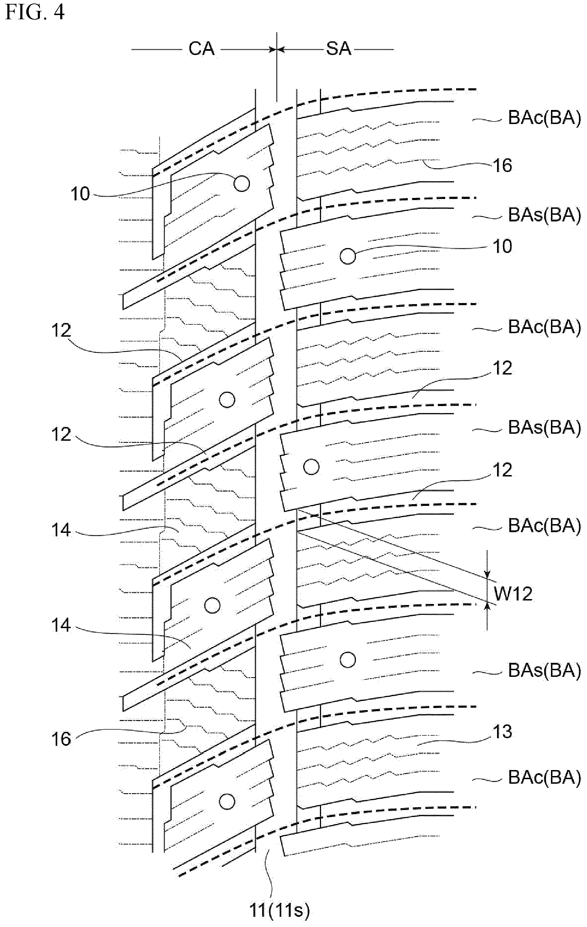

As illustrated in FIGS. 2 and 4, the tread 3 includes a lateral groove 12 extending across the shoulder main groove 11s and dividing the tread 3 into a plurality of band-shaped areas BA within a range where the lateral groove 12 extends. A groove width W12 of the lateral groove 12 at a connection portion between the lateral groove 12 and the main groove 11 is, for example, equal to or greater than 5 mm. A plurality of the lateral grooves 12 are formed at intervals in the tire circumferential direction.

The lateral groove 12 extends outward in the tire axial direction from one end located in the center area CA to the ground contact end TE across the shoulder main groove 11s. The lateral groove 12 extends obliquely relative to the tire axial direction. The lateral groove 12 is gently curved so as to be a protruding shape toward the trailing side (the rear side RD2 in the rotation direction) as a whole.

FIG. 4 is an enlarged view of the main part of FIG. 2, schematically illustrating the band-shaped area BA defined by the lateral groove 12. The band-shaped area BA is included in each of the pair of tread half portions defined by the tire equator TC, but FIG. 4 illustrates the band-shaped area BA included in one of the pair of tread half portions (the tread half located on the right side of FIG. 2).

As described above, the lateral groove 12 divides the tread 3 into the plurality of band-shaped areas BA within the range where the lateral groove 12 extends. The band-shaped area BA extends in a band shape across the center area CA and the shoulder area SA. The band-shaped areas BA are curved along the lateral groove 12. Each band-shaped area BA includes one shoulder block 13 and one block-shaped land 14 to be described later.

The band-shaped area BA includes a band-shaped area BAs including the insertion hole 10 formed in the shoulder area SA and a band-shaped area BAc including the insertion hole 10 formed in the center area CA. The band-shaped area BAs includes no insertion hole 10 formed in the center area CA, and the band-shaped area BAc includes no insertion hole 10 formed in the shoulder areas SA.

In the tire T, in at least one of the pair of tread half portions defined by the tire equator TC, the band-shaped areas BAs including the insertion hole 10 formed in the shoulder area SA and the band-shaped areas BAc including the insertion hole 10 formed in the center area CA are alternately arranged along the tire circumferential direction.

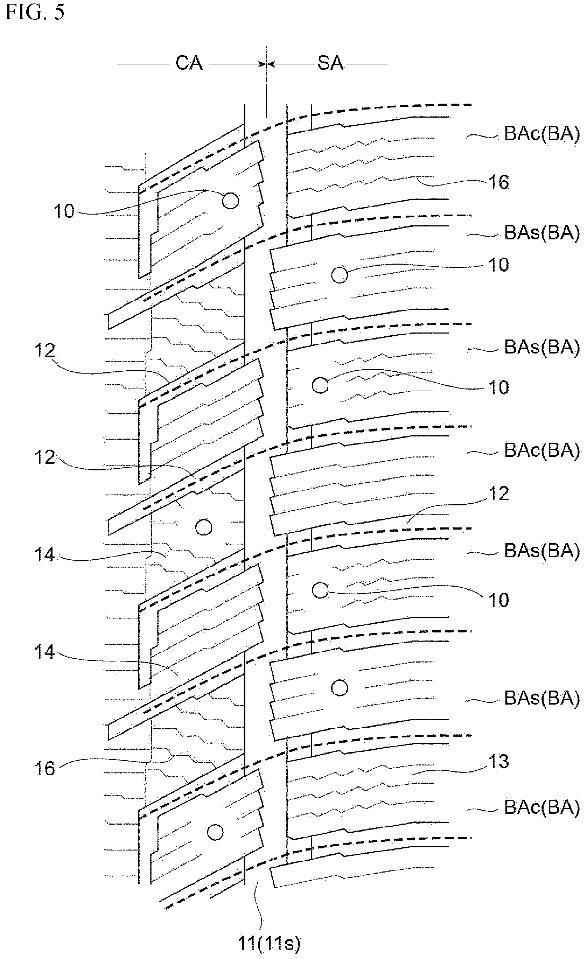

FIG. 4 illustrates an example where the band-shaped areas BAs and the band-shaped areas BAc are alternately arranged on a one-to-one basis, but the present invention is not limited to such an example. For example, as illustrated in FIG. 5, a plurality of the band-shaped areas BAs may be arranged between the band-shaped areas BAc in the tire circumferential direction.

Alternatively, a plurality of the band-shaped areas BAc may be arranged between the band-shaped areas BAs in the tire circumferential direction. In this case, it is preferable that the number of the band-shaped areas BAs or the band-shaped areas BAc arranged continuously be equal to or less than three. That is, it is preferable that the band-shaped areas BAs and the band-shaped areas BAc be alternately arranged on a one-to-one, one-to-two, one-to-three, two-to-two, two-to-three or three-to-three basis.

The band-shaped area BA may include a band-shaped area in which the insertion hole 10 is formed in both the shoulder area SA and the center area CA, or a band-shaped area in which the insertion hole 10 is formed in neither the shoulder area SA nor the center area CA. Note that, in the tread half portion, the number of such band-shaped areas is preferably less than 30 % and more preferably less than 20 % of the number of the band-shaped areas BA on the entire circumference of the tire. That is, in the tread half portion, 70 % or more of the band-shaped areas BA on the entire circumference of the tire is preferably occupied by the band-shaped areas BAs and the band-shaped areas BAc.

The number of the insertion holes 10 formed in the shoulder area SA is preferably greater than the number of the insertion holes 10 formed in the center area CA. This makes it possible to enhance the scratching effect of the shoulder area SA to which a high load is applied during turning and enhance steering stability. It is sufficient that such a relationship be satisfied when at least one (preferably both) of the tread half portions is viewed along the entire circumference of the tire. In the tread half portion, a difference between the number of the insertion holes 10 formed in the shoulder area SA and the number of the insertion holes 10 formed in the center area CA is, for example, preferably equal to or greater than three, and more preferably equal to or greater than five.

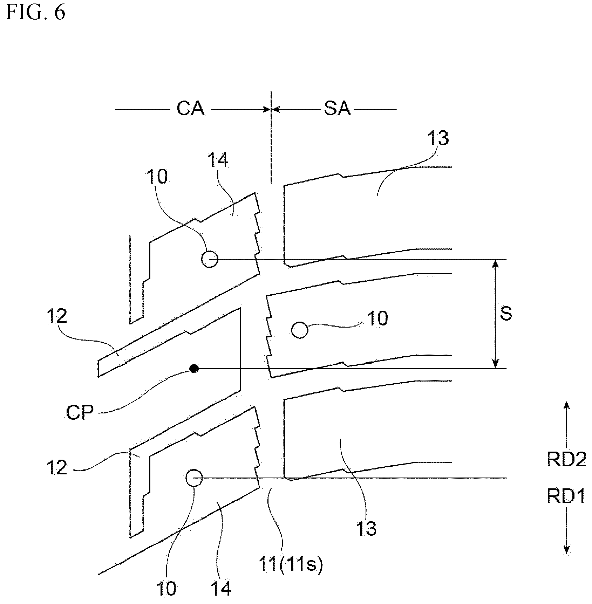

As illustrated in FIG. 6, in the present embodiment, the insertion hole 10 (strictly speaking, the center of the insertion hole 10) formed in the shoulder area SA is disposed in a section S interposed in the tire circumferential direction between the center point CP between the insertion holes 10 formed in the center area CA and the insertion hole 10 adjacent to the trailing side (the rear side RD2 in the rotation direction) of the center point CP. Such a configuration can enhance the scratching effect during driving on the icy and snowy road and satisfactorily enhance grip.

In the shoulder area SA, the plurality of shoulder blocks 13 defined by the lateral groove 12 are arranged in the tire circumferential direction. As a result, a block edge of each shoulder block 13 exerts an edge effect to enhance traveling performance on the icy and snowy roads. In the shoulder area SA, shoulder blocks 13 in which the insertion hole 10 is formed and shoulder blocks 13 in which no insertion hole 10 is formed are alternately arranged in the tire circumferential direction.

Such shoulder blocks 13 are alternately arranged on a one-to-one basis, or may be alternately arranged on a one-to-two, one-to-three, two-to-two, two-to-three or three-to-three basis. In order to suppress deterioration of uniformity, the number of the insertion holes 10 formed in each shoulder block 13 is preferably equal to or less than one.

In the center area CA, the plurality of the block-shaped lands 14 defined by the lateral groove 12 are arranged in the tire circumferential direction. As a result, a block edge of each block-shaped land 14 exerts an edge effect to enhance traveling performance on the icy and snowy roads. In the center area CA, block-shaped lands 14 in which the insertion hole 10 is formed and block-shaped lands 14 in which no insertion hole 10 is formed are alternately arranged in the tire circumferential direction.

Such block-shaped lands 14 are alternately arranged on a one-to-one basis, or may be alternately arranged on a one-to-two, one-to-three, two-to-two, two-to-three or three-to-three basis. In order to suppress deterioration of uniformity, the number of the insertion holes 10 formed in each block-shaped land 14 is preferably equal to or less than one.

The shoulder block 13, the block-shaped land 14, and the rib 15 each have a plurality of sipes 16 formed therein. The sipes 16 are each constituted by a cut-away portion having a width equal to or less than 1.0 mm. Each of the sipes 16 may have a two-dimensional shape with no change in shape in a depth direction, or may have a three-dimensional shape with a portion changed in shape in the depth direction.

In each shoulder block 13, a sipe 16 extending along the tire axial direction is formed. The plurality of sipes 16 extending approximately in parallel to the lateral groove 12 that define the shoulder block 13 are formed at intervals in the thickness direction thereof. A sipe extending in parallel to the tire circumferential direction or a sipe extending obliquely relative to the tire circumferential direction may be formed in the shoulder block 13.

In a case where the shoulder blocks 13 are arranged at variable pitches in the tire circumferential direction, that is, in a case where a pitch element, which is the basis of repetition of a pattern design, has various pitch lengths (lengths in the tire circumferential direction), the number of the sipes 16 in a shoulder block 13 having the smallest length in the tire circumferential direction is preferably less than the number of the sipes 16 in a shoulder block 13 having the largest length in the tire circumferential direction. Such a configuration makes a difference in ground contact area per unit area in the shoulder block 13 due to the difference in pitch smaller, so that it is suitable for reducing uneven wear of each block.

The center area CA is provided with a land including the rib 15 located at the center and an array of the block-shaped lands 14 located on both sides of the rib 15. In the center area CA, lateral grooves 12 extending approximately linearly and lateral grooves 12 bent in an L shape are alternately arranged in the tire circumferential direction, and the block-shaped land 14 is defined by such lateral grooves 12. In the equatorial neighboring area NA, block-shaped lands 14 including a sipe 16 inclined in the same direction as the direction of the lateral groove 12 defining the block-shaped land 14 and block-shaped lands 14 including a sipe 16 inclined in the opposite direction are alternately arranged in the tire circumferential direction. The rib 15 has a sipe 16 extending approximately in parallel to the tire axial direction.

The pneumatic tire T according to the present embodiment is equivalent of a normal studded tire (under a condition where no stud pins are inserted into the insertion holes 10) except that the insertion holes 10 are arranged as described above, and any known material, shape, structure, and the like may be used. The pneumatic tire T may have the stud pins inserted into the insertion holes 10 of the tread 3.

The embodiment according to the present invention has been described with reference to the drawings. However, this embodiment should not limit specific configurations according to the present invention.

The pneumatic tire according to the present invention is limited neither to the above embodiment nor functional effects described above. The pneumatic tire according to the present invention can be improved and modified in various manners within the scope of the appended claims.

## Claims

1. A pneumatic tire (T) comprising a tread (3) in which an insertion hole (10) into which a stud pin is inserted is formed,
wherein the tread (3) includes a plurality of main grooves (11) continuously extending along a tire circumferential direction, and is divided into a shoulder area (SA) located on an outer side in a tire axial direction and a center area (CA) located on an inner side in the tire axial direction relative to a groove width center of a shoulder main groove (11s) located on an outermost side in the tire axial direction among the plurality of main grooves (11), and
when an area of 28 % of a ground contact width (TW) centered on a tire equator (TC) in the center area (CA) is defined as an equatorial area (RA), and an area between the equatorial area (RA) and the shoulder main groove (11s) is defined as an equatorial neighboring area (NA), the insertion hole (10) formed in the equatorial neighboring area (NA) located on one side in the tire axial direction and the insertion hole (10) formed in the equatorial neighboring area (NA) located on an other side in the tire axial direction are arranged in a staggered manner along the tire circumferential direction,
where:
the ground contact width (TW) corresponds to a distance in the tire axial direction between a pair of ground contact ends (TE);
the ground contact end (TE) corresponds to an outermost position of a ground contact surface in the tire axial direction in a case where the tire (T) mounted on a normal rim and inflated to a normal internal pressure is placed perpendicularly to a flat road surface, and a normal load is applied to the tire (T);
the normal rim is a "standard rim" in JATMA standard, a "Design Rim" in TRA standard, or a "Measuring Rim" in ETRTO standard;
the normal internal pressure corresponds to a "maximum pneumatic pressure" in JATMA standard, a "maximum value" described in "TIRE LOAD LIMITS AT VARIOUS COLD INFLATION PRESSURES" in TRA standard, or "INFLATION PRESSURE" in ETRTO standard;
the normal load is the maximum load capacity in the case of JATMA, the maximum value described in the above table in the case of TRA, and "LOAD CAPACITY" in the case of ETRTO, and when the tire is for a passenger car, the normal load is 88 % of the above-described load,
**characterised in that**
no main groove is provided in the equatorial area (RA).

2. The pneumatic tire (T) according to claim 1,
wherein the equatorial area (RA) is provided with a rib (15) continuously extending in the tire circumferential direction or a block array in which a plurality of blocks are arranged.

3. The pneumatic tire (T) according to claim 1 or 2,
wherein no insertion hole (10) is formed in the equatorial area (RA).

4. The pneumatic tire (T) according to any one of claims 1 to 3,
wherein a center point between the insertion holes (10) formed in the equatorial neighboring area (NA) located on the one side in the tire axial direction and a center point between the insertion holes (10) formed in the equatorial neighboring area (NA) located on the other side in the tire axial direction are alternately arranged in the tire circumferential direction such that a line sequentially connecting the center points along the tire circumferential direction becomes a wavy line.

5. The pneumatic tire (T) according to any one of claims 1 to 4,
wherein the insertion hole (10) formed in the equatorial neighboring area (NA) and the insertion hole formed in the shoulder area (SA) adjacent to the equatorial neighboring area (NA) with the shoulder main groove (11s) interposed between the equatorial neighboring area (NA) and the shoulder area (SA) are arranged in a staggered manner along the tire circumferential direction.

6. The pneumatic tire (T) according to claim 5,
wherein a tire rotation direction is specified, and
the insertion hole (10) formed in the shoulder area (SA) is disposed in a section interposed in the tire circumferential direction between a center point between the insertion holes (10) formed in the center area (CA) and the insertion hole (10) adjacent to a trailing side of the center point.

7. The pneumatic tire (T) according to any one of claims 1 to 6,
wherein in the center area (CA), a plurality of block-shaped lands (14) defined by lateral grooves (12) are arranged in the tire circumferential direction.

8. The pneumatic tire (T) according to claim 7,
wherein in the center area (CA), the block-shaped lands (14) in which the insertion hole (10) is formed and the block-shaped lands (14) in which no insertion hole (10) is formed are alternately arranged on a one-to-one, one-to-two, one-to-three, two-to-two, two-to-three or three-to-three basis in the tire circumferential direction.

9. The pneumatic tire (T) according to claim 7,
wherein in the center area (CA), the block-shaped lands (14) in which the insertion hole (10) is formed and the block-shaped lands (14) in which no insertion hole (10) is formed are alternately arranged on the one-to-one basis in the tire circumferential direction.

10. The pneumatic tire (T) according to claim 8 or 9,
wherein a number of the insertion holes (10) formed in each of the block-shaped lands (14) is equal to or less than one.

11. The pneumatic tire (T) according to any one of claims 1 to 10,
wherein a distance from the groove width center of the shoulder main groove (11 s) to the tire equator (TC) is 52 % to 62 % of a ground contact half width.

12. The pneumatic tire (T) according to any one of claims 1 to 11, wherein a number of the main grooves (11) included in the tread is two.

## Patentansprüche

1. Luftreifen (T), der eine Lauffläche (3) aufweist, in der ein Einführungsloch (10) ausgebildet ist, in das ein Bolzen eingeführt ist,
wobei die Lauffläche (3) eine Vielzahl von Hauptrillen (11) aufweist, die sich kontinuierlich entlang einer Reifenumfangsrichtung erstrecken, und in einen Schulterbereich (SA), der sich auf einer Außenseite in einer Reifenaxialrichtung befindet, und einen Mittelbereich (CA) aufgeteilt ist, der auf einer Innenseite in der Reifenaxialrichtung relativ zu einer Rillenbreitenmitte einer Schulterhauptrille (11s) angeordnet ist, die auf einer äußersten Seite in der Reifenaxialrichtung unter der Vielzahl von Hauptrillen (11) angeordnet ist, und
wenn ein Bereich von 28 % einer Bodenkontaktbreite (TW), die auf einem Reifenäquator (TC) im Mittelbereich (CA) zentriert ist, als Äquatorbereich (RA) definiert ist und ein Bereich zwischen dem Äquatorbereich (RA) und der Schulterhauptrille (1 1s) als Äquatornachbarbereich (NA) definiert ist, das in dem Äquatornachbarbereich (NA) ausgebildete Einführungsloch (10), das sich auf einer Seite in der Reifenaxialrichtung befindet, und das in dem Äquatornachbarbereich (NA) ausgebildete Einführungsloch (10), das sich auf einer anderen Seite in der Reifenaxialrichtung befindet, in einer versetzten Weise entlang der Reifenumfangsrichtung angeordnet sind,
wobei:
die Bodenkontaktbreite (TW) einem Abstand in der Reifenaxialrichtung zwischen einem Paar von Bodenkontaktenden (TE) entspricht;
das Bodenkontaktende (TE) einer äußersten Position einer Bodenkontaktfläche in der Reifenaxialrichtung entspricht, in einem Fall, in dem der auf einer normalen Felge montierte und auf einen normalen Innendruck aufgepumpte Reifen (T) senkrecht zu einer ebenen Straßenoberfläche angeordnet ist und eine normale Last auf den Reifen (T) aufgebracht wird;
die normale Felge eine "Normfelge" gemäß der JATMA-Norm, eine "Designfelge" gemäß der TRA-Norm oder eine "Messfelge" gemäß der ETRTO-Norm ist;
der normale Innendruck einem "maximalen Luftdruck" gemäß der JATMA-Norm, einem "Maximalwert", der gemäß der TRA-Norm unter "REIFENBELASTUNGSGRENZEN BEI VERSCHIEDENEN KALTEN FÜLLDRÜCKEN" beschrieben ist, oder einem "FÜLLDRUCK" gemäß der ETRTO-Norm entspricht;
die normale Last die maximale Tragfähigkeit im Fall von JATMA, der in der obigen Tabelle beschriebene Maximalwert im Fall von TRA und "TRAGFÄHIGKEIT" im Fall von ETRTO ist, und wenn der Reifen für einen Personenkraftwagen bestimmt ist, die normale Last 88 % der oben beschriebenen Last beträgt,
**dadurch gekennzeichnet, dass**
im Äquatorbereich (RA) keine Hauptrille vorgesehen ist.

2. Luftreifen (T) nach Anspruch 1,
wobei der Äquatorbereich (RA) mit einer Rippe (15) ausgebildet ist, die sich kontinuierlich in der Reifenumfangsrichtung erstreckt, oder mit einer Blockanordnung, in der eine Vielzahl von Blöcken angeordnet ist.

3. Luftreifen (T) nach Anspruch 1 oder 2,
wobei kein Einführungsloch (10) in dem Äquatorbereich (RA) ausgebildet ist.

4. Luftreifen (T) nach einem der Ansprüche 1 bis 3,
wobei ein Mittelpunkt zwischen den Einführungslöchern (10), die in dem Äquatornachbarbereich (NA) ausgebildet sind, der auf der einen Seite in der Reifenaxialrichtung angeordnet ist, und ein Mittelpunkt zwischen den Einführungslöchern (10), die in dem Äquatornachbarbereich (NA) ausgebildet sind, der auf der anderen Seite in der Reifenaxialrichtung angeordnet ist, abwechselnd in der Reifenumfangsrichtung so angeordnet sind, dass eine Linie, die die Mittelpunkte entlang der Reifenumfangsrichtung nacheinander verbindet, zu einer Wellenlinie wird.

5. Luftreifen (T) nach einem der Ansprüche 1 bis 4,
wobei das Einführungsloch (10), das in dem Äquatornachbarbereich (NA) ausgebildet ist, und das Einführungsloch, das in dem Schulterbereich (SA) benachbart zu dem Äquatornachbarbereich (NA) ausgebildet ist, wobei die Schulterhauptrille (11s) zwischen dem Äquatornachbarbereich (NA) und dem Schulterbereich (SA) angeordnet ist, in einer versetzten Weise entlang der Reifenumfangsrichtung angeordnet sind.

6. Luftreifen (T) nach Anspruch 5,
wobei eine Reifendrehrichtung festgelegt ist und
wobei das in dem Schulterbereich (SA) ausgebildete Einführungsloch (10) in einem Bereich angeordnet ist, der in der Reifenumfangsrichtung zwischen einem Mittelpunkt zwischen den in dem Mittelbereich (CA) ausgebildeten Einführungslöchern (10) und dem Einführungsloch (10) benachbart zu einer Nachlaufseite des Mittelpunkts liegt.

7. Luftreifen (T) nach einem der Ansprüche 1 bis 6,
wobei im Mittelbereich (CA) eine Vielzahl von blockförmigen Flächen (14), die durch Querrillen (12) definiert sind, in Reifenumfangsrichtung angeordnet sind.

8. Luftreifen (T) nach Anspruch 7,
wobei in dem Mittelbereich (CA) die blockförmigen Flächen (14), in denen das Einführungsloch (10) ausgebildet ist, und die blockförmigen Flächen (14), in denen kein Einführungsloch (10) ausgebildet ist, abwechselnd auf einer Eins-zu-Eins-, Eins-zu-Zwei-, Eins-zu-Drei-, Zwei-zu-Zwei-, Zwei-zu-Drei- oder Drei-zu-Drei-Basis in der Reifenumfangsrichtung angeordnet sind.

9. Luftreifen (T) nach Anspruch 7,
wobei im Mittelbereich (CA) die blockförmigen Flächen (14), in denen das Einführungsloch (10) ausgebildet ist, und die blockförmigen Flächen (14), in denen kein Einführungsloch (10) ausgebildet ist, abwechselnd auf der Eins-zu-Eins-Basis in der Reifenumfangsrichtung angeordnet sind.

10. Luftreifen (T) nach Anspruch 8 oder 9,
wobei eine Anzahl der in jeder der blockförmigen Flächen (14) ausgebildeten Einführungslöcher (10) gleich oder kleiner als Eins ist.

11. Luftreifen (T) nach einem der Ansprüche 1 bis 10,
wobei ein Abstand von der Rillenbreitenmitte der Schulterhauptrille (11s) zum Reifenäquator (TC) 52 % bis 62 % einer Bodenkontakt-Halbbreite beträgt.

12. Luftreifen (T) nach einem der Ansprüche 1 bis 11,
wobei eine Anzahl der in der Lauffläche enthaltenen Hauptrillen (11) Zwei beträgt.

## Revendications

1. Bandage pneumatique (T) comprenant une bande de roulement (3) dans laquelle un trou d'insertion (10), dans lequel est insérée une broche de clou, est formé,
dans lequel la bande de roulement (3) inclut une pluralité de rainures principales (11) s'étendant en continu le long d'une direction circonférentielle du pneumatique, et est divisée en une zone d'épaulement (SA) située sur un côté extérieur dans une direction axiale du pneumatique, et une zone centrale (CA) située sur un côté intérieur dans la direction axiale du pneumatique relativement à un centre de largeur de rainure d'une rainure principale d'épaulement (11s) située sur un côté le plus à l'extérieur dans la direction axiale du pneumatique parmi la pluralité de rainures principales (11), et
quand une zone de 28 % d'une largeur de contact au sol (TW) centrée sur un équateur de pneumatique (TC) dans la zone centrale (CA) est définie comme étant une zone d'équateur (RA), et une zone entre la zone d'équateur (RA) et la rainure principale d'épaulement (11s) est définie comme étant une zone voisine d'équateur (NA), le trou d'insertion (10) formé dans la zone voisine d'équateur (NA) située sur un côté dans la direction axiale du pneumatique et le trou d'insertion (10) formé dans la zone voisine d'équateur (NA) située sur un autre côté dans la direction axiale du pneumatique sont agencés de manière échelonnée le long de la direction circonférentielle du pneumatique,
où :
la largeur de contact au sol (TW) correspond à une distance dans la direction axiale du pneumatique entre une paire d'extrémités de contact au sol (TE) ; l'extrémité de contact au sol (TE) correspond à une position la plus à l'extérieur d'une surface de contact au sol dans la direction axiale du pneumatique dans un cas où le pneumatique (T) monté sur une jante normale et gonflé à une pression interne normale est placé perpendiculairement à une surface routière plate, et où une charge normale est appliquée sur le pneumatique (T) ;
la jante normale est une « standard rim » (jante standard) selon la norme JATMA, une « Design Rim » (jante de conception) selon la norme TRA, ou une « Measuring Rim » (jante de mesurage) selon la norme ETRTO ;
la pression interne normale correspond à une « maximum pneumatic pressure » (pression de pneumatique maximum) selon la norme JATMA, une « maximum value » (valeur maximum) décrite dans « TIRE LOAD LIMITS AT VARIOUS COLD INFLATION PRESSURES » (limites de charge de pneumatique à diverses pressions de gonflage à froid) selon la norme TRA, ou dans « INFLATION PRESSURE » (pression de gonflage) selon la norme ETRTO ; la charge normale est la capacité de charge maximum dans le cas de JATMA, la valeur maximum décrite dans le tableau ci-dessus dans le cas de TRA, et la « LOAD CAPACITY » (capacité de charge) dans le cas de ETRTO, et quand le pneumatique est destiné à une voiture particulière, la charge normale est 88 % de la charge décrite ci-dessus,
**caractérisé en ce que**
il n'est prévu aucune rainure dans la zone d'équateur (RA).

2. Bandage pneumatique (T) selon la revendication 1,
dans lequel la zone d'équateur (RA) est pourvue d'une nervure (15) s'étendant en continu dans la circonférence circonférentielle du pneumatique ou d'un agencement de bloc dans lequel une pluralité de blocs sont agencés.

3. Bandage pneumatique (T) selon la revendication 1 ou 2,
dans lequel aucun trou d'insertion (10) n'est formé dans la zone d'équateur (RA).

4. Bandage pneumatique (T) selon l'une quelconque des revendications 1 à 3, dans lequel un point central entre les trous d'insertion (10) formés dans la zone voisine d'équateur (NA) située sur ledit un côté dans la direction axiale du pneumatique et un point central entre les trous d'insertion (10) formés dans la zone voisine d'équateur (NA) située sur ledit autre côté dans la direction axiale du pneumatique sont agencés en alternance dans la direction circonférentielle du pneumatique de telle sorte qu'une ligne connectant séquentiellement les points centraux le long de la direction circonférentielle du pneumatique devient une ligne ondulée.

5. Bandage pneumatique (T) selon l'une quelconque des revendications 1 à 4, dans lequel le trou d'insertion (10) formé dans la zone voisine d'équateur (NA) et le trou d'insertion formé dans la zone d'épaulement (SA) adjacente à la zone voisine d'équateur (NA) avec la rainure principale d'épaulement (11s) interposée entre la zone voisine d'équateur (NA) et la zone d'épaulement (SA) sont agencés de manière échelonnée le long de la direction circonférentielle du pneumatique.

6. Bandage pneumatique (T) selon la revendication 5,
dans lequel une direction de rotation de pneumatique est spécifiée, et
le trou d'insertion (10) formé dans la zone d'épaulement (SA) est disposé dans une section interposée dans la direction circonférentielle du pneumatique entre un point central entre les trous d'insertion (10) formés dans la zone centrale (CA) et le trou d'insertion (10) adjacent à un côté arrière du point central.

7. Bandage pneumatique (T) selon l'une quelconque des revendications 1 à 6, dans lequel, dans la zone centrale (CA), une pluralité de reliefs en forme de blocs (14) définis par des rainures latérales (12) sont agencés dans la direction circonférentielle du pneumatique.

8. Bandage pneumatique (T) selon la revendication 7,
dans lequel, dans la zone centrale (CA), les reliefs en forme de blocs (14) dans lesquels le trou d'insertion (10) est formé, et les reliefs en forme de blocs (14) dans lesquels aucun trou d'insertion (10) n'est formé, sont agencées en alternance sur une base de un-à-un, un-à-deux, un-à-trois, deux-à-deux, deux-à-trois ou trois-à-trois dans la direction circonférentielle du pneumatique.

9. Bandage pneumatique (T) selon la revendication 7,
dans lequel, dans la zone centrale (CA), les reliefs en forme de blocs (14) dans lesquels le trou d'insertion (10) est formé, et les reliefs en forme de blocs (14) dans lesquels aucun trou d'insertion (10) n'est formé, sont agencés en alternance sur la base de un-à-un dans la direction circonférentielle du pneumatique.

10. Bandage pneumatique (T) selon la revendication 8 ou 9,
dans lequel un nombre des trous d'insertion (10) formés dans chacun des reliefs en forme de blocs (14) est égal ou inférieur à un.

11. Bandage pneumatique (T) selon l'une quelconque des revendications 1 à 10, dans lequel une distance depuis le centre de largeur de rainure de la rainure principale d'épaulement (11s) jusqu'à l'équateur de pneumatique (TC) représente 52 % à 62 % d'une demi-largeur de contact au sol.

12. Bandage pneumatique (T) selon l'une quelconque des revendications 1 à 11, dans lequel un nombre des rainures principales (11) incluses dans la bande de roulement est égal à deux.
a
